# EUROPÄISCHE PATENTSCHRIFT

(11) **EP 1 927 053 B1**
(45) Veröffentlichungstag und Bekanntmachung des Hinweises auf die Patenterteilung: **18.11.2009**
(21) Anmeldenummer: 06793589.0
(22) Anmeldetag: 18.09.2006
(51) Int. Cl.: G06F 13/24

(54) **MIKROCONTROLLER UND VERFAHREN ZUM BETRIEB**
MICROCONTROLLER AND METHOD FOR THE OPERATION THEREOF
MICROCONTROLEUR ET PROCEDE DE FONCTIONNEMENT ASSOCIE

(30) Priorität: 23.09.2005 DE 102005045785
(43) Veröffentlichungstag der Anmeldung: 04.06.2008
(73) Patentinhaber: Continental Automotive GmbH, 30165 Hannover (DE)
(72) Erfinder: HEMMAT ESFANDABADI, Riaz, 78126 Königsfeld - Neuhausen (DE)
(86) Internationale Anmeldenummer: PCT/EP2006/066448
(87) Internationale Veröffentlichungsnummer: WO 2007/033945

(56) Entgegenhaltungen:
- EP-A2- 0 497 628
- US-B1- 6 263 395
- US-B1- 6 633 942

## Beschreibung

Die Erfindung betrifft einen Mikrocontroller mit integrierten Funktionsmodulen umfassend ein erstes Funktionsmodul welches derartig ausgebildet ist, dass es Interrupts aktiviert oder deaktiviert. Daneben betrifft die Erfindung ein Verfahren zum Betreiben eines Mikrocontrollers, insbesondere der vorgenannten Art.

Bei einem Mikroprozessor oder Mikrocontroller wird ein Interrupt (kurzfristige Unterbrechung eines laufenden Programms oder einer von einer Central-Processing-Unit abzuarbeitenden Befehlssequenz), wenn er aktiviert ist, nach einem Auslöseereignis sofort bzw. entsprechend einer Prioritätstabelle ausgelöst und die entsprechende, dem Interrupt-Request zugeordnete Routine wird ausgeführt. Nach Beendigung dieser Routine nimmt die Central-Processing-Unit die Arbeit an dem unterbrochenen Prozess bzw. der unterbrochenen Befehlssequenz wieder auf. Gegenüber einer Aufgabenzuweisung mit festen Zeitintervallen hat die Prozessverwaltung mittels Interrupts grundsätzlich den Vorteil, dass Totzeiten in festen Zeitintervallen vermieden werden und auch unterschiedlich zeitaufwendige Aufgaben flexibel und ohne zusätzlichen Zeitaufwand abgearbeitet werden können. Bei großer Häufigkeit bzw. hohen Frequenzen der Auslöseereignisse der Interrupts wird die Central-Processing-Unit von der Durchführung anderer Aufgaben abgehalten und die Funktion des zu steuernden Gerätes kann beeinträchtigt werden.

Eine derartige Architektur und damit verbundene Funktionalität liegt beispielsweise dem Mikrokontroller 80C167 und 80C166 (Hersteller: Infinion) zugrunde.

Aus der US 6 263 395 B1 ist ein Computer System und ein Verfahren für eine serielle Interrupterfassung bekannt. In diesem Zusammenhang ist ein Interrupt-Controller offenbart, der nach einer Abarbeitung einer einem aktiven Interrupt-Request zugeordneten Interrupt Service Routine durch eine Central-Processing-Unit ein eingangsseitig anliegende serielle Interrupt-Request Signal einer seriellen Interruptschiebeeinheit für eine vorgegebene Zeit maskiert und/oder ignoriert.

Aus der EP 0 497 628 A2 ist ein Multiprozessor System mit einem Interrupt-Controller bekannt. Der Interrupt-Controller ist in diesem Zusammenhang vorgesehen, eine dem Multiprozessor System zugeordnete Central-Processing-Unit von einer Interrupt-Leitung für eine vorgegebene Zeitdauer zu trennen, wenn eine vorgegebene Anzahl von durch die Central-Processing-Unit empfangenen Interrupt-Requests innerhalb einer vorgegebenen Zeitdauer überschritten wird.

Ausgehend von den Problemen und Nachteilen des Standes der Technik hat es sich die Erfindung zur Aufgabe gemacht, einen Mikrocontroller und ein Verfahren zum Betrieb eines Mikrocontrollers jeweils der eingangs genannten Art zu schaffen, welche eine stabile und ökonomische Arbeitsweise eines entsprechend ausgestatteten Gerätes auch bei hochfrequenten Auslöseereignissen an Interrupts gewährleisten. Erfindungsgemäß wird ein Mikrocontroller mit den Merkmalen des Anspruchs 1 bzw. ein Verfahren zum Betreiben eines Mikrocontrollers mit den Merkmalen des Anspruchs 7 vorgeschlagen. Die jeweils rückbezogenen Unteransprüche beinhalten vorteilhafte Weiterbildungen der Erfindung.

Ein bevorzugtes Anwendungsgebiet der Erfindung ist die Ausstattung bzw. der Betrieb von digitalen Tachographen, welche auf hochfrequente Signaländerungen reagieren müssen bzw. innerhalb kürzester Zeit eine hohe Anzahl Interrupts an den Mikrocontroller aufnehmen können müssen, da insbesondere bei höheren Fahrzeuggeschwindigkeiten der Sensor für das Geschwindigkeitssignal aus dem Getriebe des Fahrzeuges hochfrequente Signale an die Aufzeichnungseinheit sendet. Treten insbesondere bei dieser Anwendung noch zusätzlich Bedienaktivitäten des Benutzers an der Aufzeichnungseinheit auf oder versucht der Benutzer beispielsweise mittels eines integrierten Thermodruckers an der Aufzeichnungseinheit einen Bericht auszudrucken, kommt es zu Stabilitätsproblemen an der Central-Processing-Unit des Gerätes und die Gewährleistung der einwandfreien Funktion erfordert neben besonders leistungsfähiger Hardware zusätzlich eine aufwendige Steuerung der Prozesse. Diese Zwänge können die Benutzerfreundlichkeit einschränken.

Der große Vorteil der erfindungsgemäßen Verzögerungszeit zur Aktivierung eines Interrupts bzw. die erfindungsgemäße Verlängerung des deaktivierten Zustandes vereint in besonderer Weise die Vorteile der Interrupt-Steuerung von Prozessen mit denjenigen einer Zeitintervall-Steuerung. Nur in seltenen Fällen besteht das Erfordernis, den an den Interrupt geknüpften Service mit Anliegen des Interrupt-Requests unverzüglich bereitzustellen. Andererseits ist die Verwaltung verschiedener Prozesse zu Abarbeitung mittels einer Central-Processing-Unit mittels Interrupts aus den vorher erwähnten Gründen besonders komfortabel. Mittels der erfindungsgemäßen Verzögerungszeit zur Aktivierung und einem dem Interrupt zugeordneten Eintrag, insbesondere ein Flag in einem Register oder einem Arbeitsspeicher, welcher anzeigt, ob es mehr als ein einen Interrupt-Request auslösendes Ereignis während der Deaktivierung des Interrupts gab, können stoßweise auftretende hohe Frequenzen von Auslöseereignissen für Interrupts im Interesse der Prozessstabilität kontrolliert abgemildert werden, ohne dass merkbare Einbußen in Bezug auf das Prozessergebnis in Kauf genommen werden müssen. Besonders zweckmäßig ist die erfindungsgemäße Funktion des ersten Funktionsmoduls bereits in der Hardware des Mikrocontrollers implementiert, so dass eine entsprechende Programmierung von dieser Funktion Gebrauch machen kann. Daneben ergibt sich der Vorteil, dass der Vorgang der erfindungsgemäß erweiterten Interrupt-Kontrolle keinen zusätzlichen Programmieraufwand erfordert oder die Laufzeit entsprechender Programme verlängert. Eine besonders vorteilhafte Möglichkeit, die erfindungsgemäße Verzögerungszeit bei den Prozessen des Mikrocontrollers zu nutzen, besteht darin, dass das erste Funktionsmodul eine Interrupt-Verwaltungseinheit ist, die die Möglichkeit aufweist, eine Aktivierung eines Interrupts um die Dauer der dem Interrupt zugeordneten Verzögerungszeit zu. Eine andere zweckmäßige Möglichkeit besteht darin, dass das erste Funktionsmodul eine Capture-Compare-Einheit ist, welche mittels des Mikrocontrollers einem bestimmten Interrupt zumindest zeitweise zugeordnet werden kann. Auch eine Kombination der beiden zuvor beschriebenen Möglichkeiten kann die erfindungsgemäßen Vorteile erbringen, wenn eine Capture-Compare-Einheit des Mikrocontrollers einen bestimmten Interrupt zugeordnet werden kann und nach einer entsprechend zugeordneten Verzögerungszeit die Interrupt-Verwaltungseinheit zur Aktivierung des deaktivierten Interrupts.

Die Verwendung einer Capture-Compare-Einheit zur direkten oder indirekten Kontrolle der Deaktivierung eines Interrupts ist zweckmäßig, wenn in einem Compare-Register der Capture-Compare-Einheit ein Zeitwert abgelegt wird, wobei die Dauer zur Übereinstimmung des Zeitwertes mit demjenigen eines fortlaufenden Timers der Capture-Compare-Einheit der Verzögerungszeit entspricht. Entsprechend der Compare-Funktion veranlasst die Capture-Compare-Einheit bei Übereinstimmung des Zeitwertes bzw. Ablauf der Verzögerungszeit eine Aktivierung des entsprechenden Interrupts.

Hierbei kann die Hardware des Mikrocontrollers entweder so gestaltet sein, dass die Capture-Compare-Einheit direkt den entsprechenden Interrupt aktiviert oder die Interrupt-Verwaltungseinheit dazu veranlasst. Hierzu kann die Architektur des Mikrocontrollers entweder eine gesonderte Vorkehrung vorsehen oder die Auslösung eines Interrupts durch die Capture-Compare-Einheit, der die Aktivierung des entsprechenden Interrupts mittels der Interrupt-Verwaltungseinheit zur Folge hat.

Eine bevorzugte Weiterbildung der Erfindung sieht vor, dass das erste Funktionsmodul nach der Abarbeitung mindestens eines an dem entsprechenden Interrupt, dem die Verzögerungszeit zugeordnet ist, anstehenden Interrupt-Requests, den Interrupt deaktiviert und erst nach der Verzögerungszeit wieder aktiviert. Statt mindestens eines an dem Interrupt anstehenden Interrupt-Requests kann auch die Abarbeitung einer bestimmten Anzahl der dort anstehenden Interrupt-Requests bzw. Maximalanzahl vorgesehen sein oder die Abarbeitung sämtlicher an dem entsprechenden Interrupt anstehenden Interrupt-Requests. Hierzu kann vorgesehen sein, dass ein Zwischenspeicher das Anliegen der Interrupt-Requests vorrübergehend speichert. Wird vorgegeben, dass mit jeder erfindungsgemäß verzögerten Aktivierung des Interrupts nur eine geringe Anzahl oder genau ein Interrupt-Request abzuarbeiten ist, werden insbesondere hochfrequente Stoßzeiten bzw. starke Auslastungen des Interrupts verstärkt in die Zukunft verlagert. Hierbei sollte die bestimmte Anzahl der abzuarbeitenden Interrupt-Requests hinreichend hoch gewählt werden, so dass eine Abarbeitung sämtlicher Interrupt-Requests stets binnen eines akzeptablen Zeitraums zu verzeichnen ist.

Im Folgenden ist die Erfindung anhand eines Ausführungsbeispiels unter Bezugnahme auf Zeichnungen ohne Einschränkungswirkung auf das Beispiel verdeutlicht. Es zeigen:
- Figur 1: der schematische Aufbau eines erfindungsgemäßen Mikrocontrollers und
- Figur 2: der schematische Aufbau einer erfindungsgemäßen Interruptverwaltungseinheit und
- Figur 3: der schematische Aufbau einer erfindungsgemäßen Compare-Einheit gemäß einer anderen Ausbildung.

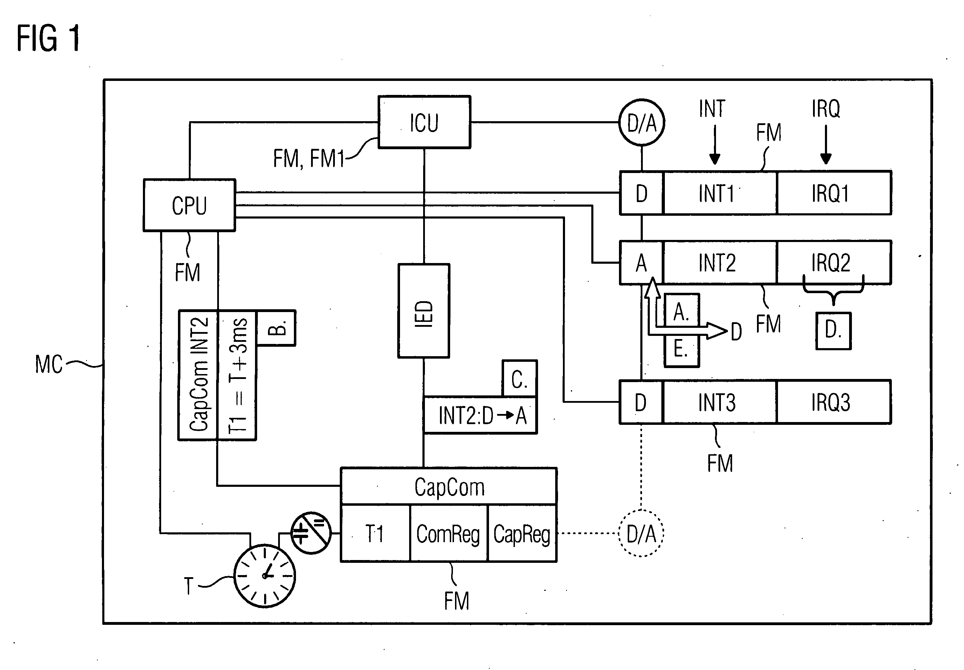

In der Figur 1 ist ein erfindungsgemäßer Mikrocontroller MC schematisch dargestellt. Verfahrensschritte sind mit A. bis E. bezeichnet und in Kästchen eingetragen. Wesentliche Funktionsmodule FM des Mikrocontrollers MC sind eine zentrale Verarbeitungseinheit CPU (Central Processing Unit), eine Interrupt-Verwaltungseinheit ICU, mehrere Interrupts INT und eine Capture-Compare-Einheit CapCom, die einen Timer T umfasst. Die einzelnen Funktionsmodule FM stehen miteinander in signalübertragender Verbindung. Die Figur 1 stellt zunächst eine Ausführungsvariante der Erfindung dar, bei welcher die Interrupt-Verwaltungseinheit ICU dem erfindungsgemäßen ersten Funktionsmodul FM1 entspricht und demgemäß Interrupts INT aktiviert bzw. deaktiviert (angedeutet als eingekreistes D/A). Gestrichelt dargestellt ist eine zweite Variante, bei welcher die Capture-Compare-Einheit CapCom die Funktion des ersten Funktionsmoduls FM1 übernimmt und erfindungsgemäß die Interrupts INT aktiviert bzw. deaktiviert. Die folgenden Ausführungen beziehen sich auf die zuerst genannte Variante.

Die Arbeitsweise bzw. der Betrieb des Mikrocontrollers MC lässt sich in Hinblick auf die Erfindung im Wesentlichen mit Bezug auf die 5 Schritte A. bis E. beispielhaft beschreiben. Während des ersten Schrittes A. deaktiviert das erste Funktionsmodul FM1 den mit INT2 bezeichneten Interrupt. Dieser Sachverhalt ist mit einem A bezeichnet. In einem zweiten Schritt B. sendet die zentrale Verarbeitungseinheit CPU an die Capture-Compare-Einheit CapCom einerseits die Zuordnung zu einem Interrupt (hier INT2) und andererseits die Verzögerungszeit IED in Form eines ersten Zeitwertes, Tl, der einem zukünftigen Output (Tl = T+3 ms) des Timers entspricht. Die Capture-Compare-Einheit CapCom übernimmt den Zeitwert Tl in ein Compare-Register ComReg und vergleicht diesen fortlaufend mit dem Wert des Timers T. Bei Übereinstimmung des Zeitwertes Tl aktiviert das erste Funktionsmodul FM1 in einen dritten Schritt C. auf Veranlassung der Capture-Compare-Einheit CapCom den ersten Interrupt INT2 bzw. INT2. Die Aktivierung (A) des Interrupts INT2 hat die Abarbeitung des auf diesem Interrupt INT2 anstehenden Interrupt-Request IRQ2 während des vierten Schritts D. zur Folge. Nach Abarbeitung des an dem Interrupt INT2 anstehenden Interrupt-Requests IRQ2 veranlasst die Interrupt-Verwaltungseinheit ICU die Deaktivierung D in dem mit E. bezeichnetem Fünften Schritt.

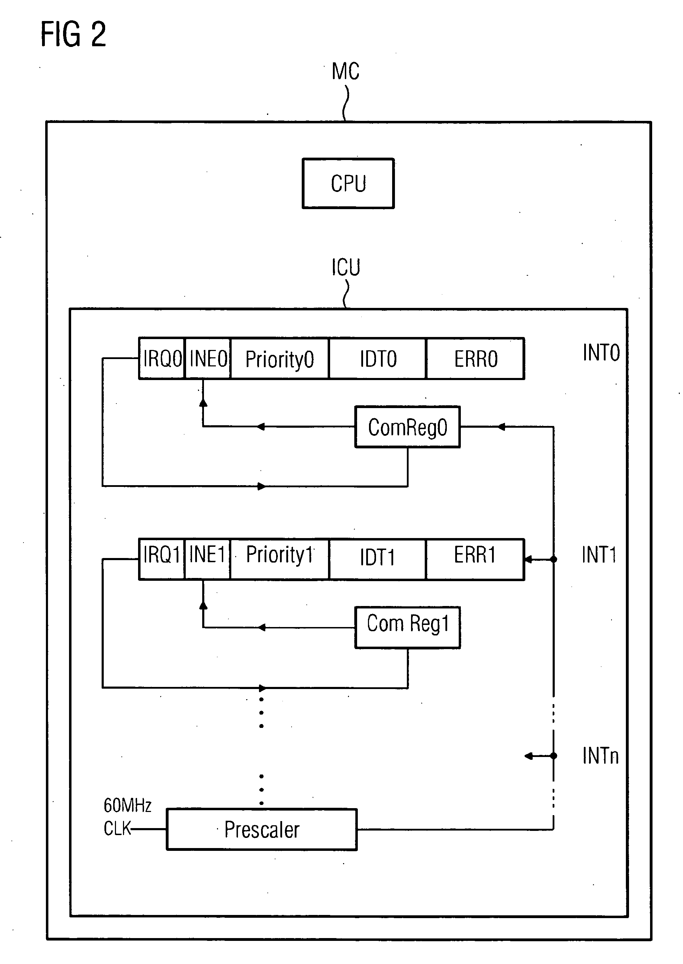

Figur 2 zeigt einen erfindungsgemäßen Mikrocontroller MC mit einer zentralen Verarbeitungseinheit CPU und einer Interrupt-Verwaltungseinheit ICU. Die Interrupt-Verwaltungseinheit ICU regelt die Abläufe der Interrupts INTO - INTn. Jedem Interrupt INTO - INTn sind die Einträge Interrupt-Request IRQ0 - IRQn, ein zweiwertiges Aktivierungsflag IENO - IENN (auch als Aktivierungsbit bezeichnet), eine Priorität Priority0 - PriorityN, eine Verzögerungszeit IEDOO - IEDn und ein Fehlereintrag ERRO - ERRn zugeordnet. Daneben ist jedem Interrupt INTO - INTn ein Compare-Register COMREGO -COMREGn zugeordnet, welches fortlaufend mit dem Wert einer Systemuhr CLK verglichen wird. Da die Systemuhr CLK (auch als Timer bezeichnet) mit 60MHz läuft, sorgt eine Skalierungseinheit PRESCALER mit einer Verzögerung 1/10 für eine niedrigere Taktfrequenz des Vergleichswertes. Die Skalierungseinheit PRESCALER ist bei einer hohen Systemfrequenz (der CLK) zweckmäßig und unterteilt diese entsprechend den Anforderungen aus der Mess- und Registrieraufgabe in eine sinnvolle Auflösung. Die Interrupt-Verwaltungseinheit ICU aktiviert und deaktiviert in Abhängigkeit von dem Vergleichsergebnis des Compare-Registers COMREGO - COMREGn mit der Systemuhr CLK die Interrupts INTO - INTn, so dass anstehende Interrupt-Requests IRQ abgearbeitet werden können. Zwischen der Deaktivierung eines Interrupts INTO - INTn und der anschließenden Aktivierung liegt die Verzögerungszeit IEDO - IEDn. Sind mehrere Interrupts INTO - INTn aktiviert und liegen auf diesem gleichzeitig abzuarbeitende Interrupt-Requests IRQ an, entscheidet die Priorität PRIORITY, welcher zuerst abgearbeitet wird. Liegen in der Phase der Deaktivierung mehrere Interrupt-Requests IRQ auf demselben Interrupt INT0 - INTn an, wird das Fehlerregister ERR0 - ERRn des entsprechenden Interrupts INTO - INTn einen Fehler anzeigend aktiviert.

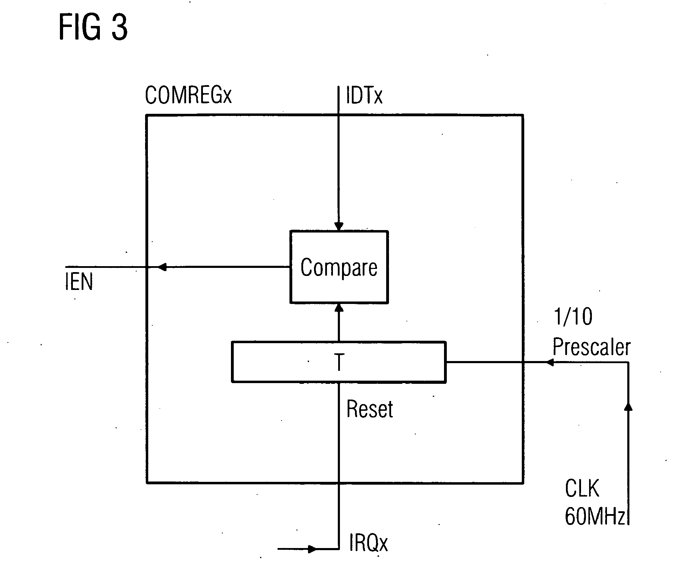

Figur 3 zeigt die Arbeitsweise eines Compare-Registers COMREGO anderer erfindungsgemäßer Ausbildung, wobei das Compare-Register eine Verzögerungszeit IEDx mit dem Wert eines Timers T vergleicht und im Falle eines Übereinstimmens den entsprechend zugeordneten Interrupt INTO - INTn aktiviert (IEN). Mittels eines Interrupt-Requests IRQx wird der Timer des Compare-Registers COMREGx zu Null gesetzt (RESET). Die Compare-Einheit vergleicht (COMPARE) den Wert des Timers T mit der Verzögerungszeit IEDx.

## Patentansprüche

1. Mikrocontroller (MC) mit integrierten Funktionsmodulen (FM) umfassend ein erstes Funktionsmodul (FM1), welches derartig ausgebildet ist, dass es Interrupts (INT) aktiviert oder deaktiviert und einen deaktivierten Interrupt (INT) erst nach Ablauf einer zu dem Interrupt (INT) zugeordneten Verzögerungszeit (IED) aktiviert,
wobei der Mikrocontroller derart ausgebildet ist, dass jedem Interrupt (INT) ein Eintrag, insbesondere ein Flag (ERRFLG) in einem Register oder einem Arbeitsspeicher, zugeordnet ist welcher anzeigt, ob es mehr als ein einen Interrupt-Request (IRQ) auslösendes Ereignis (Trigger-Event) während der Deaktivierung des Interrupts (INT) gab.

2. Mikrocontroller (MC) nach Anspruch 1, **dadurch gekennzeichnet,**
**dass** das erste Funktionsmodul (FM1) eine Interrupt-Verwaltungseinheit (ICU) ist, welche derartig ausgebildet ist, dass sie die Aktivierung eines deaktivierten Interrupts (INT) um die Dauer der zu dem Interrupt (INT) zugeordneten Verzögerungszeit (IED) verzögert.

3. Mikrocontroller (MC) nach Anspruch 1, **dadurch gekennzeichnet,**
**dass** das erste Funktionsmodul (FM1) eine Capture-Compare-Einheit (CapCom) ist und der Mikrocontroller (MC) derart ausgebildet ist, dass die Capture-Compare-Einheit (CapCom) einem bestimmten Interrupt (INT) zugeordnet werden kann.

4. Mikrocontroller (MC) nach Anspruch 2, **dadurch gekennzeichnet,**
**dass** die Funktionsmodule (FM) mindestens eine Capture-Compare-Einheit (CapCom) umfassen und der Mikrocontroller (MC) derart ausgebildet ist, dass die Capture-Compare-Einheit (CapCom) einem bestimmten Interrupt (INT) zugeordnet werden kann und die Capture-Compare-Einheit (CapCom) die Interrupt-Verwaltungseinheit (ICU) zur Aktivierung des deaktivierten Interrupts (Int) veranlasst.

5. Mikrocontroller (MC) nach Anspruch 3 oder 4, **dadurch gekennzeichnet,**
**dass** in einem Compare-Register (ComReg) der Capture-Compare-Einheit (CapCom) ein Zeitwert (T1) abgelegt wird, wobei die Dauer zur Übereinstimmung des Zeitwertes (T1) mit demjenigen eines fortlaufenden Timers (T) der Capture-Compare-Einheit (CapCom) der Verzögerungszeit (IED) entspricht.

6. Mikrocontroller (MC) nach einem der Ansprüche 1 bis 5, **dadurch gekennzeichnet,**
**dass** das erste Funktionsmodul (FM1) nach der Abarbeitung eines an dem Interrupt (INT), dem die Verzögerungszeit (IED) zugeordnet ist, anstehenden Interrupt-Requests (IRQ), den Interrupt (INT) deaktiviert und erst nach der Verzögerungszeit (IED) wieder aktiviert.

7. Verfahren zum Betreiben eines Mikrocontrollers, der mindestens einen Interrupt (INT) und Funktionsmodule (FM) umfassend ein erstes Funktionsmodul (FM1) aufweist, insbesondere zum Betreiben eines Mikrocontrollers (MC) nach einem der Ansprüche 1 bis 6, bei dem
in einem ersten Schritt (A.) ein Funktionsmodul (FM) einen ersten Interrupt (INT2) deaktiviert wird,
in einem zweiten Schritt (B.) ein in der Zukunft liegender erster Zeitwert (T1) in ein Register des Mikrocontrollers (MC) übernommen wird,
in einem dritten Schritt (C.) bei Übereinstimmung des Zeitwertes (T1) des Registers mit demjenigen eines Timers (T), der erste Interrupt (INT2) von dem ersten Funktionsmodul(FM1) aktiviert wird,
in einem vierten Schritt (D.) ein Interrupt-Request (IRQ) auf dem ersten Interrupt (INT) abgearbeitet wird, in einem fünften Schritt (E.) der Mikrocontroller (MC) den ersten Interrupt (INT2) deaktiviert, wenn der Interrupt-Request (IRQ) auf dem ersten Interrupt (INT2) abgearbeitet worden ist,
jedem Interupt (INT) ein Eintrag, insbesondere ein Flag (ERRFLG) zugeordnet ist, welcher anzeigt, ob es mehr als ein einen Interrupt-Request (IRQ) auslösendes Ereignis (Trigger-Event) während der Deaktivierung des Interrupts gab.

8. Verfahren nach Anspruch 7, **dadurch gekennzeichnet,**
**dass** das erste Funktionsmodul (FM1) eine Capture-Compare-Einheit (CapCom) ist und der Mikrocontroller (MC) derart ausgebildet ist, dass die Capture-Compare-Einheit (CapCom) einem bestimmten Interrupt (INT) zur Aktivierung oder Deaktivierung zugeordnet wird.

9. Verfahren nach Anspruch 7, **dadurch gekennzeichnet,**
**dass** die Funktionsmodule mindestens eine Capture-Compare-Einheit (CapCom) umfassen und der Mikrocontroller (MC) derart ausgebildet ist, dass die Capture-Compare-Einheit (CapCom) einem bestimmten Interrupt (INT) zur Aktivierung zugeordnet wird und die Capture-Compare-Einheit (CapCom) bei Übereinstimmung die Interrupt-Verwaltungseinheit (ICU) zur Aktivierung des deaktivierten Interrupts (Int) veranlasst.

10. Verfahren nach Anspruch 8 oder 9, **dadurch gekennzeichnet,**
**dass** in dem Compare-Register (ComReg) der Capture-Compare-Einheit (CapCom) ein Zeitwert (T1) abgelegt wird, wobei die Dauer zur Übereinstimmung des Zeitwertes (T1) mit demjenigen eines fortlaufenden Timers (T) der Capture-Compare-Einheit (CapCom) der Verzögerungszeit (IED) entspricht.

11. Verfahren nach einem der Ansprüche 7 bis 10, **dadurch gekennzeichnet,**
**dass** während des vierten Schritts genau ein Interrupt-Request (IRQ) abgearbeitet wird und in dem fünften Schritt das erste Funktionsmodul (FM1) den ersten Interrupt (INT2) deaktiviert, wenn ein Interrupt-Request (IRQ) auf dem ersten Interrupt (INT2) abgearbeitet worden ist.

12. Verfahren nach Anspruch 9, **dadurch gekennzeichnet,**
**dass** in dem dritten Schritt bei Eintritt des in dem Compare-Register (ComReg) gespeicherten Zeitwertes (T1) die Capture-Compare-Einheit (CapCom) die Interrupt-Verwaltungseinheit (ICU) mittels eines zweiten Interrupts (INT2) dazu
veranlasst, den ersten Interrupt (INT2) zu aktivieren.

13. Verfahren nach Anspruch 9, **dadurch gekennzeichnet,**
**dass** die Capture-Compare-Einheit (CapCom) einem bestimmten Interrupt (INT) zugeordnet ist und in dem dritten Schritt bei Eintritt des Zeitwertes (T1) des Compare-Registers (ComReg) die Capture-Compare-Einheit (CapCom) die Interrupt-Verwaltungseinheit (ICU) dazu veranlasst, den ersten Interrupt (INT2) zu aktivieren.

## Claims

1. Microcontroller (MC) having integrated functional modules (FM) comprising a first functional module (FM1), which is in a form such that it activates or deactivates interrupts (INT), and activates a deactivated interrupt (INT) only after a delay time (IED) associated with the interrupt (INT) has elapsed, the microcontroller being in a form such that each interrupt (INT) has an associated entry, particularly a flag (ERRFLG), in a register or a main memory which indicates whether there was more than one event triggering an interrupt request (IRQ) (trigger event) during the deactivation of the interrupt (INT).

2. Microcontroller (MC) according to Claim 1, **characterized in that** the first functional module (FM1) is an interrupt management unit (ICU) which is in a form such that it delays the activation of a deactivated interrupt (INT) by the period of the delay time (IED) associated with the interrupt (INT).

3. Microcontroller (MC) according to Claim 1, **characterized in that** the first functional module (FM1) is a capture compare unit (CapCom) and the microcontroller (MC) is in a form such that the capture compare unit (CapCom) can be associated with a particular interrupt (INT).

4. Microcontroller (MC) according to Claim 2, **characterized in that** the functional modules (FM) comprise at least one capture compare unit (CapCom) and the microcontroller (MC) is in a form such that the capture compare unit (CapCom) can be associated with a particular interrupt (INT) and the capture compare unit (CapCom) prompts the interrupt management unit (ICU) to activate the deactivated interrupt (Int).

5. Microcontroller (MC) according to Claim 3 or 4, **characterized in that** a compare register (ComReg) in the capture compare unit (CapCom) is used to store a time value (T1), with the period for the time value (T1) to match that of a running timer (T) in the capture compare unit (CapCom) corresponding to the delay time (IED).

6. Microcontroller (MC) according to one of Claims 1 to 5, **characterized in that** the first functional module (FM1), following execution of an interrupt request (IRQ) for the interrupt (INT) with which the delay time (IED) is associated, deactivates the interrupt (INT) and reactivates it only after the delay time (IED).

7. Method for operating a microcontroller which has at least one interrupt (INT) and functional modules (FM) comprising a first functional module (FM1), in particular for operating a microcontroller (MC) according to one of Claims 1 to 6, in which
in a first step (A.) a functional module (FM) deactivates a first interrupt (INT2),
in a second step (B.) a first time value (T1) situated in the future is transferred to a register in the microcontroller (MC),
in a third step (C.) the first interrupt (INT2) is activated by the first functional module (FM1) if the time value (T1) in the register matches that of a timer (T),
in a fourth step (D.) an interrupt request (IRQ) for the first interrupt (INT) is executed,
in a fifth step (E.) the microcontroller (MC) deactivates the first interrupt (INT2) if the interrupt request (IRQ) for the first interrupt (INT2) has been executed,
each interrupt (INT) has an associated entry, particularly a flag (ERRFLG), which indicates whether there was more than one event triggering an interrupt request (IRQ) (trigger event) during the deactivation of the interrupt.

8. Method according to Claim 7, **characterized in that** the first functional module (FM1) is a capture compare unit (CapCom) and the microcontroller (MC) is in a form such that the capture compare unit (CapCom) is associated with a particular interrupt (INT) for activation or deactivation.

9. Method according to Claim 7, **characterized in that** the functional modules comprise at least one capture compare unit (CapCom) and the microcontroller (MC) is in a form such that the capture compare unit (CapCom) is associated with a particular interrupt (INT) for activation and the capture compare unit (CapCom) prompts the interrupt management unit (ICU) to activate the deactivated interrupt (Int) if there is a match.

10. Method according to Claim 8 or 9, **characterized in that** the compare register (ComReg) in the capture compare unit (CapCom) is used to store a time value (T1), with the period for the time value (T1) to match that of a running timer (T) in the capture compare unit (CapCom) corresponding to the delay time (IED).

11. Method according to one of Claims 7 to 10, **characterized in that** during the fourth step precisely one interrupt request (IRQ) is executed and in the fifth step the first functional module (FM1) deactivates the first interrupt (INT2) if an interrupt request (IRQ) for the first interrupt (INT2) has been executed.

12. Method according to Claim 9, **characterized in that** in the third step, come the time value (T1) stored in the compare register (ComReg), the capture compare unit (CapCom) uses a second interrupt (INT2) to prompt the interrupt management unit (ICU) to activate the first interrupt (INT2).

13. Method according to Claim 9, **characterized in that** the capture compare unit (CapCom) is associated with a particular interrupt (INT) and in the third step, come the time value (T1) in the compare register (ComReg), the capture compare unit (CapCom) prompts the interrupt management unit (ICU) to activate the first interrupt (INT2).

## Revendications

1. Microcontrôleur (MC) à modules fonctionnels intégrés (FM) comprenant un premier module fonctionnel (FM1), qui est conçu de manière telle qu'il active et désactive des vecteurs d'interruption ou "interrupts" (INT) et n'active un vecteur d'interruption ou "interrupt" (INT), qui a été désactivé, qu'après l'écoulement d'un temps de retard (IED) affecté au vecteur d'interruption ou "interrupt" (INT), le microcontrôleur étant conçu de manière telle que, à chaque vecteur d'interruption ou "interrupt" (INT), correspond une inscription, notamment un drapeau ou flag (ERRFLG), dans un registre ou dans une mémoire vive, laquelle inscription indique s'il y a eu plus d'un événement (Trigger-Event) déclenchant une requête d'interruption (IRQ) pendant la période de désactivation du vecteur d'interruption ou "interrupt" (INT).

2. Microcontrôleur (MC) selon la revendication 1, **caractérisé par le fait**
**que** le premier module fonctionnel (FM1) est une unité de gestion (ICU) des vecteurs d'interruption ou "interrupt", laquelle est conçue de manière telle qu'elle retarde la réactivation d'un vecteur d'interruption ou "interrupt" (INT) qui a été désactivé, de la durée du temps de retard (IED) affecté au vecteur d'interruption ou "interrupt" (INT).

3. Microcontrôleur (MC) selon la revendication 1, **caractérisé par le fait**
**que** le premier module fonctionnel (FM1) est une unité de saisie et comparaison ou unité "capture-compare"(CapCom) et que le microcontrôleur (MC) est conçu de manière telle que l'unité de saisie et comparaison ou unité "capture-compare"(CapCom) peut être affectée à un vecteur d'interruption ou "interrupt" (INT) déterminé.

4. Microcontrôleur (MC) selon la revendication 2, **caractérisé par le fait**
**que** les modules fonctionnels (FM) comprennent au moins une unité de saisie et comparaison ou unité "capture-compare"(CapCom) et que le microcontrôleur (MC) est conçu de manière telle que l'unité de saisie et comparaison ou unité "capture-compare" (CapCom) peut être affectée à un vecteur d'interruption ou "interrupt" (INT) déterminé et que l'unité de saisie et comparaison ou unité "capture-compare" (CapCom) incite l'unité de gestion (ICU) des vecteurs d'interruption ou "interrupt" à réactiver le vecteur d'interruption ou "interrupt" (INT) qui a été désactivé.

5. Microcontrôleur (MC) selon la revendication 3 ou 4, **caractérisé par le fait**
**qu'**une valeur de temps (T1) est stockée dans un registre de comparaison (ComReg) de l'unité de saisie et comparaison ou unité "capture-compare" (CapCom), la durée pour la concordance de la valeur de temps (T1) avec celle d'une horloge à minuterie continue (T) de l'unité de saisie et comparaison ou unité "capture-compare" (CapCom) correspondant au temps de retard (IED).

6. Microcontrôleur (MC) selon l'une des revendications 1 à 5, **caractérisé par le fait**
**que** le premier module fonctionnel (FM1), après le traitement d'une requête d'interruption (IRQ) en attente sur le vecteur d'interruption ou "interrupt" (INT) auquel le temps de retard (IED) est affecté, désactive le vecteur d'interruption ou "interrupt" (INT) et ne le réactive qu'après l'écoulement du temps de retard (IED).

7. Procédé pour exploiter un microcontrôleur qui, en comprenant un vecteur d'interruption ou "interrupt" (INT) et des modules fonctionnels (FM), comporte un premier module fonctionnel (FM1), notamment pour exploiter un microcontrôleur (MC) selon l'une des revendications 1 à 6, pour lequel,
au cours d'une première phase (A.), un module fonctionnel (FM) désactive un premier vecteur d'interruption ou "interrupt" (INT2),
au cours d'une deuxième phase (B.), une première valeur de temps (T1) située dans l'avenir est stockée dans un registre du microcontrôleur (MC),
au cours d'une troisième phase (C.), si la valeur de temps (T1) du registre correspond avec celle d'une horloge à minuterie (T), le premier vecteur d'interruption ou "interrupt" (INT2) est réactivé par le premier module fonctionnel (FM1),
au cours d'une quatrième phase (D.), une requête d'interruption (IRQ) est traitée sur le premier vecteur d'interruption ou "interrupt" (INT),
au cours d'une cinquième phase (E.), le microcontrôleur (MC) désactive le premier vecteur d'interruption ou "interrupt" (INT2) lorsque la requête d'interruption (IRQ) a été traitée sur le premier vecteur d'interruption ou "interrupt" (INT2),
à chaque vecteur d'interruption ou "interrupt" (INT), est affectée une inscription, notamment un drapeau ou "flag" (ERRFLG), laquelle indique s'il y a eu plus d'un événement (Trigger-Event) déclenchant une requête d'interruption (IRQ) pendant la désactivation du vecteur d'interruption ou "interrupt".

8. Procédé selon la revendication 7, **caractérisé par le fait**
**que** le premier module fonctionnel (FM1) est une unité de saisie et comparaison ou unité "capture-compare" (CapCom) et que le microcontrôleur (MC) est conçu de manière telle que l'unité de saisie et comparaison ou unité "capture-compare" (CapCom) peut être affectée à un vecteur d'interruption ou "interrupt" (INT) déterminé pour son activation et sa désactivation.

9. Procédé selon la revendication 7, **caractérisé par le fait**
**que** les modules fonctionnels comprennent au moins une unité de saisie et comparaison ou unité "capture-compare" (CapCom) et que le microcontrôleur (MC) est conçu de manière telle que l'unité de saisie et comparaison ou unité "capture-compare" (CapCom) peut être affectée à un vecteur d'interruption ou "interrupt" (INT) déterminé pour son activation et que, en cas de concordance, l'unité de saisie et comparaison ou unité "capture-compare" (CapCom) incite l'unité de gestion (ICU) des vecteurs d'interruption ou "interrupt" à réactiver le vecteur d'interruption ou "interrupt" (INT) qui a été désactivé.

10. Procédé selon la revendication 8 ou 9, **caractérisé par le fait**
**qu'**une valeur de temps (T1) est stockée dans un registre de comparaison (ComReg) de l'unité de saisie et comparaison ou unité "capture-compare" (CapCom), la durée pour la concordance de la valeur de temps (T1) avec celle d'une horloge à minuterie continue (T) de l'unité de saisie et comparaison ou unité "capture-compare" (CapCom) correspondant au temps de retard (IED).

11. Procédé selon l'une des revendications 7 à 10, **caractérisé par le fait**
**que**, pendant la quatrième phase, exactement une requête d'interruption (IRQ) est traitée et, pendant la cinquième phase, le premier module fonctionnel (FM1) désactive le premier vecteur d'interruption ou "interrupt" (INT2) lorsqu'une requête d'interruption (IRQ) a été traitée sur le premier vecteur d'interruption ou "interrupt" (INT2).

12. Procédé selon la revendication 9, **caractérisé par le fait**
**que**, pendant la troisième phase, en présence de la valeur de temps (T1) mémorisée dans le registre de comparaison (ComReg), l'unité de saisie et comparaison ou unité "capture-compare" (CapCom) incite, au moyen d'un deuxième vecteur d'interruption ou "interrupt" INT2), l'unité de gestion (ICU) des vecteurs d'interruption ou "interrupts" à réactiver le premier vecteur d'interruption ou "interrupt" (INT2).

13. Procédé selon la revendication 9, **caractérisé par le fait**
**que** l'unité de saisie et comparaison ou unité "capture-compare" (CapCom) est affectée à un vecteur d'interruption ou "interrupt" (INT) déterminé et que, au cours de la troisième phase, en présence de la valeur de temps (T1) mémorisée dans le registre de comparaison (ComReg), l'unité de saisie et comparaison ou unité "capture-compare" (CapCom) incite l'unité de gestion (ICU) des vecteurs d'interruption ou "interrupt" à activer le premier vecteur d'interruption ou "interrupt" (INT2).
